# FASCICULE DE BREVET EUROPEEN

(11) **EP 0 809 833 B1**
(45) Date de publication et mention de la délivrance du brevet: **11.08.1999**
(21) Numéro de dépôt: 96904150.8
(22) Date de dépôt: 15.02.1996
(51) Int. Cl.: G06K 19/077, G06K 19/18

(54) **PROCEDE DE FABRICATION DE CARTES ELECTRONIQUES**
VERFAHREN ZUR HERSTELLUNG ELEKTRONISCHER KARTEN
PROCESS FOR PRODUCING ELECTRONIC CARDS

(30) Priorité: 15.02.1995 FR 9501733
(43) Date de publication de la demande: 03.12.1997
(73) Titulaire: GEMPLUS, 13420 Gemenos (FR)
(72) Inventeur: CORNIGLION, Isabelle, F-13390 Auriol (FR); FIDALGO, Jean, Christophe, F-13420 Gemenos (FR); LERICHE, Christian, F-13530 Trets (FR)
(86) Numéro de dépôt international: FR9600253
(87) Numéro de publication internationale: WO9625721

(56) Documents cités:
- EP-A- 0 031 521
- EP-A- 0 138 121
- EP-A- 0 570 784
- EP-A- 0 636 495

## Description

L'invention concerne un procédé de fabrication de cartes électroniques ainsi que des cartes obtenues par un tel procédé.

Le mot carte doit être considéré, dans la présente invention, dans un sens large, incluant notamment tout objet portable aux dimensions normalisées, et comportant, d'une part, un micromodule et, d'autre part, un corps servant de support portable. Toutefois, l'invention vise en particulier les cartes à puce et, parmi ces cartes, les cartes ayant un fonctionnement sans contact, dans lesquelles le micromodule est relié à une antenne pour une transmission électromagnétique des données. Dans la suite de l'exposé, on entendra par carte sans contact, une carte ayant un fonctionnement exclusivement sans contact, ou alors, une carte hybride ayant un fonctionnement sans contact et un fonctionnement classique, à contacts.

La fabrication de cartes électroniques en grande série peut être effectuée selon différents procédés.

Certains procédés font intervenir une injection, à une température supérieure à 90°C et sous forte pression, par exemple de l'ordre de 700 kg/cm², d'une matière thermoplastique visqueuse polymérisée à l'état fondu dans une cavité fermée d'un moule. Après refroidissement au dessous de son point de fusion, cette matière forme une épaisseur du corps de carte.

Cependant, de tels procédés n'offrent pas la possibilité d'un réglage simple de la viscosité de la matière plastique injectée. Or, lors de la conception d'un procédé de fabrication de cartes par injection, il est nécessaire d'effectuer de nombreux essais en variant notamment la viscosité de la matière injectée, pour aboutir, en définitive, à un procédé optimal, acceptable industriellement, avec zéro défaut.

EP-A-0570784 décrit un procédé pour la fabrication d'une carte à puce du type sans contacte, selon lequel on répand sur un plan de travail un liant sous forme liquide et de préférence avec une viscosité suffisante pour ne pas s'étaler de manière trop importante. Un module électronique est noyé dans la couche formée par ledit liant.

La présente invention a pour but de proposer un procédé de fabrication de cartes électroniques en grande série, qui pallie à moindre coût les inconvénients précités, et qui permette notamment un réglage simple de la viscosité de la matière plastique injectée ou dispensée.

Un autre but de l'invention est de permettre l'obtention d'épaisseurs de cartes dont les caractéristiques, telles que l'adhésion, la rigidité ou la tenue en température sont réglables et contrôlables avec facilité.

Ces buts, ainsi que d'autres qui apparaîtront par la suite, sont atteints grâce à un procédé selon lequel, pour la fabrication de la carte, on répand un mélange comportant un monomère liquide de faible viscosité. L'ajout d'un tiers corps permettra alors de régler la viscosité du mélange comportant ledit monomère.

L'invention a donc pour objet un procédé de fabrication d'une carte électronique tel que défini dans la revendication 1.

La description qui va suivre, et qui ne comporte aucun caractère limitatif, permettra de mieux comprendre la manière dont l'invention peut être mise en pratique.

Elle doit être lue au regard des dessins annexés, dans lesquels :
- la figure 1A montre, en coupe transversale, une carte à contacts obtenue par un procédé selon l'invention ;
- la figure 1B montre, en coupe transversale, une carte sans contact obtenue par un procédé selon l'invention ;
- la figure 2 illustre le schéma réactionnel mis en oeuvre dans un procédé selon l'invention ; et
- la figure 3 illustre, schématiquement, un mode de mise en oeuvre du procédé de l'invention.

Dans l'exemple de la présente description, les cartes électroniques 1 correspondent à la norme ISO 7810. Elles comportent un micromodule 2 et un corps de carte 3.

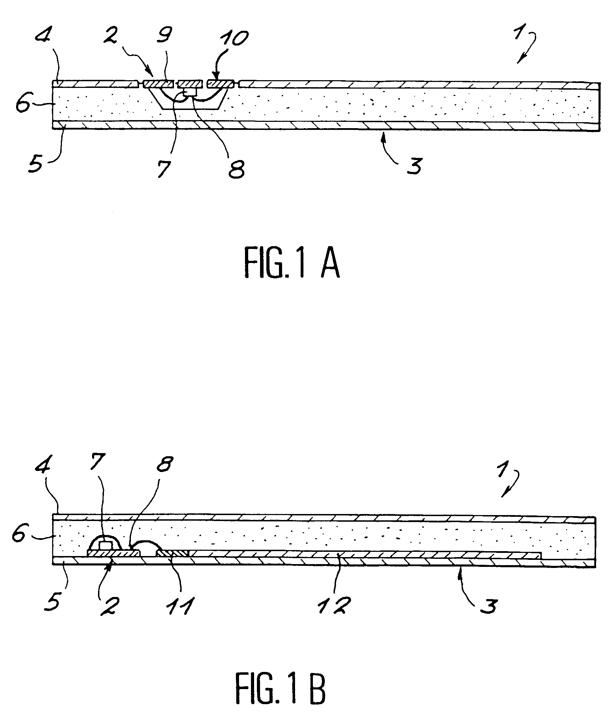

Le corps de carte 3 est un parallélépipède rectangle de faible épaisseur dont les dimensions hors tout sont de l'ordre de 85 mm de longueur, 54 mm de largeur, et de 0,76 mm d'épaisseur. Il comporte n couches superposées. Le nombre n peut être égal à un. Toutefois, dans le cas général, il est supérieur à un. Dans l'exemple des figures 1A et 1B, il est égal à trois, et le corps de carte 3 comprend alors une couche de dessus 4, une couche de dessous 5, et une sous-couche 6.

Le micromodule 2 est inséré dans le corps de carte 3. Il est en contact avec une couche plastique polymérisée du corps de carte 3, par exemple la sous-couche 6. Il comporte une puce à circuit intégrés 7 et des bornes de connexion 8.

Dans le cas d'une carte à contacts (figure 1A), les bornes de connexion 8 sont connectées à des plots de contact 9 métallisés affleurant à la surface du corps de carte 3 et formant des métallisations 10.

Dans le cas d'une carte sans contact (figure 1B), les bornes de connexion 8 sont connectées à des plages de contact 11 d'une antenne 12 inclue dans le corps de carte 3. L'antenne 12 est formée, soit d'une bobine de fil métallique dont le diamètre est de l'ordre de 30 µm, soit d'un diélectrique métallisé ou contrecollé avec du métal d'une épaisseur de l'ordre de 80 µm, soit, dans le cas d'une antenne hyperfréquences, d'une feuille diélectrique dont l'épaisseur est voisine de 80 µm.

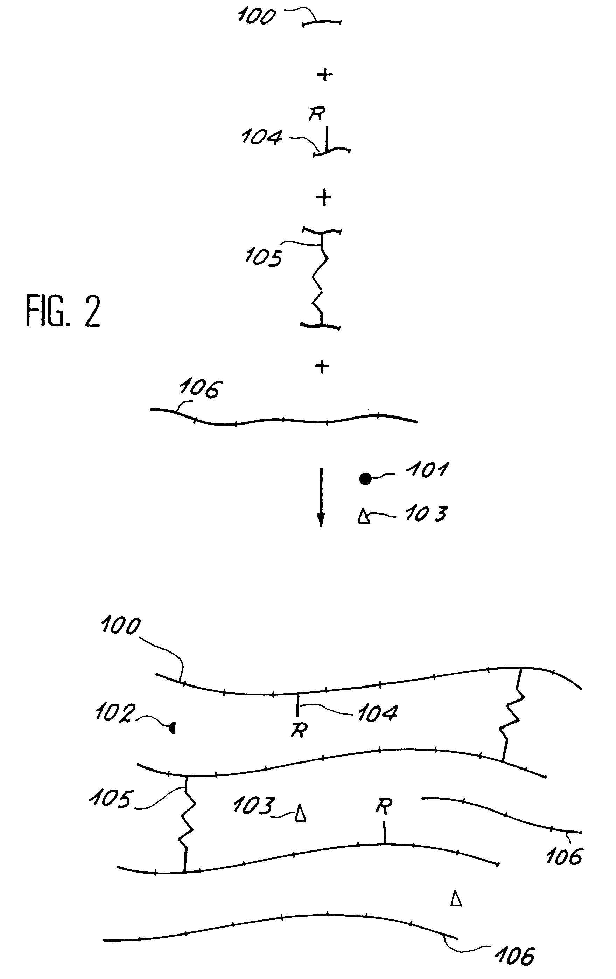

Selon l'invention, pour la fabrication d'une couche plastique polymérisée 6 du corps de carte 3, on répand, sur un support de fabrication de la carte 1, un mélange comportant au moins un monomère référencé 100 en figure 2. Ce monomère 100 est liquide et de faible viscosité. En pratique, la viscosité du ou des monomères 100 est comprise entre 100 et 1.000 mPa.s environ et préférentiellement inférieure à 500 mPa.s environ à une température Trép. de répandage du mélange.

D'autre part, on amorce ou initialise la polymérisation du ou des monomères 100 grâce à un amorceur 101. L'amorceur 101 peut être un catalyseur ionique ou radicalaire, ou alors, un rayonnement actinique.

Dans le cas où l'amorceur 101 est un catalyseur, il est présent dans le mélange, lors du répandage, et se décompose, au cours de l'amorçage de la polymérisation, en un ou plusieurs produits de décomposition 102 dudit amorçage.

Par contre, dans le cas où l'amorceur 101 est un rayonnement actinique tel que, par exemple, un rayonnement UV, ledit amorceur 101 n'est, bien entendu, pas présent dans le mélange mais il induit la décomposition d'un agent de celui-ci qui forme un radical ou un ion amorçant la polymérisation. A la suite de l'amorçage, on retrouve un ou plusieurs produits de décomposition 102 dudit amorçage.

Lorsque la polymérisation du monomère 100 se réalise uniquement en présence d'un amorceur 101, le temps de polymérisation est important, supérieur à 15 minutes environ. Aussi, on accélère la réaction de polymérisation en ajoutant, dans le mélange comportant l'amorceur 101 et le monomère 100, un accélérateur 103 qui ne peut, à lui seul, amorcer la réaction de polymérisation.

Selon l'invention, on ajuste la quantité d'accélérateur 103 de manière à régler, en particulier, la vitesse de polymérisation du monomère 100. Plus l'accélérateur 103 est présent en grande quantité dans le mélange et actif, plus la polymérisation est rapide, et plus le procédé est rentable industriellement.

Cependant, un compromis doit être trouvé relativement à l'accélération de la polymérisation. En effet, une polymérisation trop rapide entraîne une montée en température trop forte due à l'exothermicité de la réaction de polymérisation. En pratique, en présence d'un accélérateur 103 en quantité suffisante, la température d'un mélange comportant uniquement l'amorceur 101 et le monomère 100 augmente rapidement jusqu'à des valeurs de l'ordre de 80 °C. Or, une telle température induit, en particulier, la formation de bulles dont l'élimination nécessaire est délicate. Elle peut, en outre, endommager le micromodule voire de la puce électronique de la carte. Elle favorise, enfin, le retrait.

Par ailleurs, en présence d'un accélérateur 103 seulement, la polymérisation du monomère 100 donne lieu à un produit cassant, les chaînes polymériques étant disposées, en général, à proximité les unes des autres. En outre, la polymérisation n'est pas complète et le monomère 100 non polymérisé, qui est généralement volatil, se répand lentement dans l'atmosphère et dégage une odeur nauséabonde.

De ce fait, selon l'invention, on ajoute au mélange répandu comportant le monomère 100, l'amorceur 101 et l'accélérateur 103, un composé intercalaire simple 104, un composé intercalaire élastomérique 105, et un polymère 106. D'autres composés peuvent cependant être introduits dans le mélange et notamment, une charge minérale permettant, par exemple, de régler la blancheur de la couche polymérisée obtenue. Dans un exemple, la charge minérale est une charge de carbonate de calcium.

Le composé intercalaire simple 104 est un monomère compatible avec le monomère 100 mais portant un radical chimique R destiné à éloigner des chaînes polymériques adjacentes jusqu'à une distance suffisante pour conférer, à la couche polymérisée, une élasticité et une flexibilité supérieure à celle que l'on aurait obtenue avec le monomère 100 seul.

Le composé intercalaire élastomérique 105 est un polymère difonctionnel qui a la propriété de s'intercaler dans et entre deux chaînes polymériques adjacentes en vue d'une réticulation de la couche polymérisée. Le segment élastomérique du composé 105 permet notamment de régler totalement la flexibilité de la couche polymérisée sans toutefois augmenter sa fragilité.

Les composés intercalaires 104 et 105 provoquent en outre un éloignement suffisant des chaînes polymériques adjacentes pour que la polymérisation des monomères 100 soit totale, l'odeur nauséabonde étant alors supprimée.

Le polymère 106 est compatible avec le monomère 100, c'est-à-dire mélangeable avec celui-ci. C'est le cas, notamment, lorsque ledit polymère 106 est un homopolymère du monomère 100. C'est le cas, en outre, lorsque ce polymère 106 est un polymère, homopolymère ou hétéropolymère, qui se dissout dans le monomère 100. Par ailleurs, le polymère 106 peut être issu de la polymérisation rapide d'un monomère différent du monomère 100. Grâce à de tels monomères, la viscosité, lors du répandage, peut être conservée à un niveau très bas.

Les réactions de polymérisation présentent un seuil au-dessus duquel elles sont dites accélérées. C'est l'effet de gel (ou effet Trommsdorff) qui est constaté sur les monomères acryliques et méthacryliques. En pratique, ce seuil varie entre 2 et 20 % de polymérisation du ou des monomères présents dans le mélange. Aussi, si l'on ajuste avantageusement un rapport polymère/(polymère + monomère) du mélange répandu en fonction du ou des monomères 100, 104, 105 présents, de leur viscosité, de leur réactivité, le tout à taux d'amorceur 101 et d'accélérateur 103 déterminé, de manière à ce que ledit rapport soit compris entre 2/100 et 20/100 ou supérieur, la polymérisation est alors d'emblée accélérée.

Choisir un rapport polymère/(monomère + polymère) supérieur au seuil de l'effet de gel présente des avantages. Cela permet, d'une part, de diminuer encore le temps global de polymérisation des monomères 100, 104, 105. Cela permet, d'autre part, de limiter la quantité de chaleur totale libérée par la réaction exothermique de polymérisation, une partie des composants du mélange étant déjà polymérisée. Cela permet, en outre, de limiter le retrait de la matière polymérisée sur le support de fabrication de la carte et autour du micromodule et, enfin, d'apporter, le cas échéant, si le polymère n'est pas un homopolymère du monomère et si ledit polymère est plus flexible que ledit homopolymère du monomère, une flexibilité plus grande et un effet plastifiant à la couche polymérisée obtenue.

Cependant, choisir un rapport polymère/(monomère + polymère) supérieur au seuil de l'effet de gel présente un inconvénient majeur : cela augmente la viscosité du mélange. La répartition de la matière répandue sur le support de fabrication de la carte s'effectue alors plus difficilement, ce qui nécessite en particulier un répandage du mélange sous une pression plus forte. On remarquera que cette répartition est un problème critique en matière de fabrication de cartes à puce où les cavités des moules ont une profondeur très faible qui ne facilite pas l'écoulement des fluides.

Un compromis doit donc être trouvé relativement à la viscosité du mélange répandu.

Un tel compromis est très différent selon, notamment, le type de carte que l'on fabrique ou même, selon le procédé employé pour la fabrication de cartes d'un type particulier.

Par exemple, dans le cas d'une fabrication de cartes sans contact par injection, la pression d'injection est avantageusement faible eu égard à la fragilité de l'antenne. Aussi, la viscosité de la matière répandue est choisie avec attention, de manière à ce qu'elle soit suffisamment faible pour ne pas endommager l'antenne et suffisamment forte pour induire, le cas échéant, un effet de gel.

De même, dans le cas d'une fabrication de cartes de type sans contact par simple dispense conforme, par exemple, au procédé décrit dans la demande de brevet français déposée le 13 septembre 1994 sous le numéro FR-A-2724477, qui propose une répartition de la matière dispensée le long de l'antenne par guidage, le rapport polymère/(monomère + polymère) est choisi de manière à ce qu'il soit proche du seuil d'accélération de la polymérisation par effet de gel, la viscosité choisie étant ainsi la plus faible possible.

Par contre, dans le cas d'une fabrication de cartes à contacts par injection, la pression d'injection peut être plus importante puisqu'il n'y a pas d'antenne et la viscosité du mélange répandu est avantageusement supérieure aux viscosités précitées.

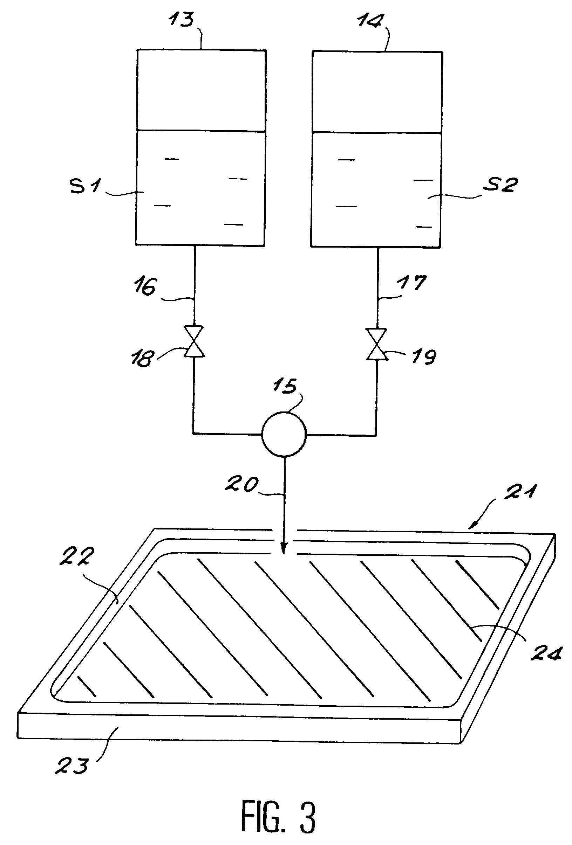

Dans un mode de mise en oeuvre du procédé de l'invention représenté en figure 3, le monomère 100, l'amorceur 101, l'accélérateur 103, le composé intercalaire simple 104, le composé intercalaire élastomérique 105 et le polymère 106 sont conservés dans deux réservoirs de stockage 13 et 14 dans des conditions de conservation telles que ledit monomère 100 est sensiblement stable dans le temps, c'est-à-dire telles que la polymérisation dudit monomère 100 n'ait pas lieu de manière significative.

Bien entendu, le nombre de réservoirs n'est pas limité à deux. Par exemple, on peut avoir six réservoirs différents, chaque réservoir comprenant un composé 100, 101, 103, 104, 105 ou 106.

Chaque réservoir 13 ou 14 peut contenir une solution comportant un ou plusieurs des composés suivants : monomère 100, amorceur 101, accélérateur 103, composé intercalaire simple 104, composé intercalaire élastomérique 105, et polymère 106. Toutefois, un réservoir 13, 14 ne peut contenir en même temps le monomère 100, l'accélérateur 103, et l'amorceur 101. D'autre part, l'amorceur 101 est préférentiellement introduit dans la solution monomérique la moins réactive. Enfin, les réservoirs comportent avantageusement, à la fois le monomère 100 et le polymère 106 afin que la viscosité des deux solutions soient proches.

Aussi, dans l'exemple de la figure 3, le réservoir 13 comporte une solution S1 comportant les composés 100, 101, 104, 105 et 106, tandis que le réservoir 14 comporte une solution S2 comportant les composés 100, 103, 104, 105 et 106.

Les réservoirs 13 et 14 sont reliés à une tête de mélange 15 par des conduits respectivement référencés 16 et 17. Le débit du mélange M1 dans le conduit 16 est régulé par une vanne 18, tandis que le débit du mélange M2 dans le conduit 17 est régulé par une vanne 19. Le mélange des solutions S1 et S2, et donc, de l'amorceur 101 et de l'accélérateur 103, s'effectue dans la tête de mélange 15 selon un rapport S1/S2 contrôlé par les vannes 18 et 19. Ce mélange a une température Tmél.. Dans un exemple, Tmél. vaut 25°C.

Compte tenu du fait que le mélange final comportant à la fois l'amorceur 101 et l'accélérateur 103 réagit rapidement et que la couche polymérisée obtenue peut être thermodurcissable (réticulée) et non soluble, on utilise avantageusement une tête de mélange 15 haute pression, autonettoyante. Cependant, dans le cas où la couche polymérisée obtenue est thermoplastique (non réticulée) et soluble, il est possible d'utiliser une tête de mélange basse pression.

Dans le mode de réalisation présenté en figure 3, le répandage est une simple dispense du mélange issu de la tête de mélange 15 et amené par un conduit 20 sur un support de fabrication 21 des cartes 1. Ce support 21 est alors formé d'une cavité ouverte 22 d'un demi-moule 23, dit couronne, disposé sur un feuil 24 destiné à former une couche de dessous du corps de carte 3. Le répandage est effectué sous une pression réduite, de l'ordre de la pression atmosphérique.

Cependant, dans d'autres modes de réalisation, le support de fabrication 21 est formé d'un cadre alvéolé tel que celui qui est décrit dans la demande de brevet français déposée le 24 février 1994 sous le numéro 94 02130 et dans d'autres modes de réalisation encore, le répandage est une injection sous pression dans une cavité fermée d'un moule au format de la carte ou de la couche que l'on veut obtenir.

Bien entendu, le micromodule 2 et, le cas échéant, l'antenne 12 peuvent être présents lors du répandage sur le support de fabrication 21. Ils peuvent toutefois être insérés dans le mélange répandu, alors que la polymérisation dudit mélange n'est pas suffisante pour amener sa viscosité à des valeurs trop importantes, supérieures à 10.000 mPa.s environ.

Une lamination du mélange répandu peut être réalisée, par exemple, entre deux rouleaux en vue de l'obtention rapide d'épaisseurs prédéterminées du corps de carte. D'ailleurs, une telle lamination ne se conçoit qu'avec des viscosités et des vitesses de polymérisation particulièrement adaptées et compatibles, notamment, avec un étalement sans écoulement, postérieur à ladite lamination, sur un feuil inférieur, et avec le recouvrement d'un ensemble feuil inférieur - mélange laminé par un second feuil destiné à former une couche de dessus du corps de carte.

D'autre part, une lamination peut être réalisée après une étape de répandage dans une cavité ouverte d'un moule couronne, et après l'application d'un feuil supérieur destiné à former une couche de dessus du corps de carte, suite au démoulage et à la découpe des feuils de dessous et de dessus. On remarquera que, dans ce cas, les feuils appliqués adhèrent naturellement aux mélanges répandus, la polymérisation desdites matières n'étant pas, au stade de l'application desdits feuils, totalement terminée.

Par ailleurs, un amorçage par rayonnement peut être effectué une fois que le mélange a été répandu, par exemple, par l'ouverture d'une cavité ouverte du support de fabrication 21 d'une carte. On remarquera que si le mélange du monomère 100, de l'amorceur 101, de l'accélérateur 103, des composés 104, 105 et du polymère 106, se produit directement sur le support de fabrication de la carte 1, les étapes de mélange, de répandage et d'activation précitées du procédé de l'invention sont alors confondues.

Selon l'invention, les jeux de vannes 18, 19 permettent, en variant leurs ouvertures, de choisir facilement un compromis entre toutes les contraintes citées afin d'obtenir un produit satisfaisant. De ce point de vue, la solution de l'invention est bien meilleure que les solutions anciennes énumérées. En effet, avec celles-ci, à chaque nouvelle forme ou à chaque nouvelle contrainte, aspect de surface à modifier par exemple, il fallait refaire de nombreux essais fastidieux, construire de nombreux moules avant de sélectionner un procédé et un moule adéquats. Grâce aux possibilités de réglage du procédé selon l'invention, de bons compromis sont obtenus rapidement par des étapes simples d'ajustement du rapport. De tels compromis ont permis la mise au point de procédés de fabrication de cartes dans lesquels des matières thermodurcissables polymérisent à des températures inférieures à 70°C environ et de l'ordre de 50°C environ, alors que la viscosité des matières répandues est inférieure à 10.000 mPa.s voire 5.000 mPa.s.

Pour la mise en pratique de l'invention, on utilise avantageusement un mélange à base d'un monomère acrylique ou méthacrylique. En particulier, les monomères suivants sont utilisables :
- Méthacrylate de méthyl (MMA),
- Méthacrylate d'ethyl triglycol (ETMA),
- Méthacrylate de 2 Hydroxyéthyl (HEMA),
- Ester d'acide méthacrylique (C13-MA),
- Isobornyl méthacrylate (IBOMA),
- Isobornyl acrylate (IBA),
- Dicyclopentenyloxyethyl méthacrylate (DPOMA),
- Méthacrylate de tetrahydrofurfuryle (THFMA),
- Méthacrylate de n-butyl (BMA),
- Méthacrylate de benzyl (BNMA),
- 2, diméthylaminoéthyl-méthacrylate (DMAEMA),
- 1, 4-diméthacrylate de butanediol (BDDMA),
- Diméthacrylate de diéthylèneglycol (TEGDMA), - Diméthacrylate de diuréthane (TMDI),
- 1, 12 diméthacrylate de dodécandiol (DDDMA) et
- Triméthyiolpropantriméthacrylate (TMPTMA).

Considérons maintenant l'exemple du méthacrylate de méthyle (MMA). Le polyméthacrylate de méthyle (PMMA), obtenu par polymérisation du MMA, est particulièrement adapté à l'enrobage d'inserts.

Toutefois, la polymérisation du MMA est connue pour être très exothermique et pour présenter un retrait important nécessitant, dans le domaine de la fabrication des cartes, la sélection de bons compromis par des réglages précis selon le type de carte et le procédé choisis.

En présence d'un amorceur radicalaire simple, tel qu'un peroxyde, ou un rayonnement ultra-violet, le MMA polymérise et l'on obtient alors du PMMA. Cependant, cette polymérisation est lente. Par exemple, elle est de l'ordre de 45 min. en présence de peroxyde de benzoyle.

Aussi, on accélère la polymérisation du MMA par une amine tertiaire telle que, par exemple, la N,N-bis (2-hydroxyéthyle)-p-toluidine). Grâce à cette amine, le temps de polymérisation est considérablement diminué. Il est de l'ordre de 15 minutes. Néanmoins, le produit obtenu se révèle cassant, l'on retrouve un nombre important de bulles, et une odeur nauséabonde se répand.

Aussi, en utilisant le triéthylène glycol monométhyle méthacrylate (TEGMA) ou l'HEMA comme composé intercalaire simple et le polybutadiène diméthacrylique (PBDM) comme composé intercalaire élastomérique, on règle la flexibilité de la couche polymérique ou la carte obtenue et on évite le dégagement des mauvaises odeurs.

De plus, en ajoutant, dans le mélange, du PMMA, un polymère compatible avec le MMA, ou un monomère dont la polymérisation est extrêmement rapide, tel que par exemple, un cyanoacrylique, on atteint immédiatement ou rapidement, lors du mélange, un rapport polymère(monomère + polymère) de l'ordre 20 % et le temps de polymérisation est alors diminué par effet de gel. En pratique, ce temps global de polymérisation que l'on atteint est de l'ordre de 6 min..

Par ailleurs, on introduit avantageusement, dans le mélange, une charge de dioxyde de titane (TiO₂) en vue de la blanchir la couche polymérisée obtenue.

Les exemples suivants sont donnés à titre illustratif nullement limitatif de l'invention.

Dans un premier exemple relatif, en particulier, à la fabrication de cartes sans contact par simple dispense dans une cavité ouverte, les solutions S1 et S2, stockées à la température ambiante dans les réservoirs 13 et 14, ont la composition suivante, les pourcentages étant donnés en poids :

| S1 : | |
|---|---|
| MMA (100) | 53,3 % |
| amine (103) | 4,6 % |
| PMMA (106) | 33,3 % |
| TiO₂ | 8,6 % |

| S2 : | |
|---|---|
| MMA (100) | 41,5 % |
| peroxyde (101) | 7,7 % |
| PBDM (105) | 41,5 % |
| TiO₂ | 9,2 % |

Si l'on effectue le mélange, à Tmél. égale à la température ambiante, de 10,5 g de S1 avec 6,5 g de S2, on obtient un mélange M dont la composition est la suivante, les pourcentages étant donnés en poids :

| M : | |
|---|---|
| MMA (100) | 48,8 % |
| peroxyde (102) | 2,9 % |
| Amine (103) | 2,9 % |
| PBDM (105) | 15,9 % |
| PMMA (106) | 20,6 % |
| TiO₂ | 8,8 % |

La polymérisation de ce mélange s'effectue en moins de 6 min. à une température inférieure à 50 °C.

A cette température, ainsi qu'aux températures plus élevées, le MMA est liquide et sa viscosité est inférieure à 100 mPa.s environ. La viscosité de ce monomère est donc bien inférieure aux viscosités des matières thermoplastiques utilisées dans les procédés de fabrication de cartes des techniques antérieures qui excèdent les 10.000 mPa.s.

Bien entendu, les quantités de MMA, PMMA, d'amine et de peroxyde sont ajustées dans les solutions S1 et S2 et dans le mélange M, grâce au vannes 18 et 19. De ce fait, on dispose, grâce aux constituants précités combinés ensemble en proportions réglables, de moyens simples d'obtenir une mise au point rapide d'un moule et l'obtention d'un procédé optimal, acceptable industriellement. Si Tmél. et Trép. sont de l'ordre de la température ambiante, la température maximale obtenue lors de la polymérisation augmente, dans de telles conditions, jusqu'à 45°C environ alors que la viscosité du mélange est, à Trép., de l'ordre de 1000 mPa.s..

Dans un second exemple, on provoque l'effet de gel en déclenchant la polymérisation très rapide de monomères cyanoacrylate (CNA) par voie anionique, grâce à l'intervention d'un catalyseur basique : une amine. Au moment du mélange, le rapport PMMA/(CNA + MMA + PMMA) n'est pas suffisant pour déclencher l'effet de gel. Cependant, l'amine déclenche une polymérisation rapide, voire instantanée, du CNA en polycyanoacrylate (PCNA). Aussi, le rapport (PMMA + PCNA)/(MMA + PMMA + PCNA) devient suffisant pour générer un effet de gel dans le mélange et accélérer la polymérisation du MMA activée par l'ensemble peroxyde/amine. Les solutions S1 et S2, stockées à la température ambiante dans les réservoirs 13 et 14, ont la composition suivante, les pourcentages étant donnés en poids :

### S1 :

- MMA (100) 48,4 %
- peroxyde (101) 3,2 %
- CNA (106) 16,1 %
- PMMA (106) 32,3 %

### S2 :

- MMA (100) 57,7 %
- amine (103) 3,8 %
- PMMA (106) 38,5 %

Si l'on effectue, à Tmél. égale à la température ambiante, le mélange de 10,3 g de S1 avec 8,7 g de S2, on obtient alors un mélange M dont la composition est la suivante, les pourcentages étant donnés en poids :

### M :

- MMA (100) 52,7 %
- peroxyde (102) 1,75 %
- amine (103) 1,75 %
- PCNA (106) 8,7 %
- PMMA (106) 35,1 %

La polymérisation de ce mélange s'effectue alors en moins de 5 min. à une température de l'ordre de 55°C, l'augmentation de 10°C par rapport à la température précitée de 45°C étant due, notamment, à la polymérisation du CNA.

Dans un troisième exemple, on a introduit dans le mélange, du HEMA.

Les solutions S1 et S2, stockés à la température ambiante dans les réservoirs 13 et 14 ont alors la composition suivante, les pourcentages étant donnés un poids.

| S1 : | |
|---|---|
| MMA (100) | 15,8 % |
| peroxyde (101) | 3,5 % |
| HEMA (104) | 60,7 % |
| PBDM (105) | 20 % |

| S2 : | |
|---|---|
| MMA (100) | 20 % |
| amine (103) | 1,9% |
| HEMA (104) | 61,9 % |
| PBDM (105) | 16,1 % |

Si l'on effectue, à Tmél égale à la température ambiante, le mélange de 10 g de S1 avec 10 g de S2, on obtient alors un mélange M dont la composition est la suivante, les pourcentages étant donnés en poids.

### M :

- MMA (100) 20 %
- peroxyde (102) 1,75 %
- amine (103) 0,95 %
- HEMA (104) 61,3 %
- PBDM (105) 16,0 %

HEMA constitue, en définitive, un composé intercalaire élastomérique. Aussi, la polymérisation du MMA sera totale et aucune mauvaise odeur ne se dégagera.

Dans un quatrième exemple, on a supprimé le MMA. Les solutions S1 et S2, stockées à la température ambiante ont alors la composition suivante, les pourcentages étant donnés en poids.

| S1 : | |
|---|---|
| HEMA (100) | 76 % |
| peroxyde (101) | 4 % |
| PBDM (105) | 20 % |

| S2 : | |
|---|---|
| HEMA (100) | 77,4 % |
| amine (103) | 2,4 % |
| PBDM (105) | 20,2 % |

Si l'on effectue, à Tmél égale à la température ambiante, le mélange de 10 g de S1 avec 10 g de S2, on obtient alors un mélange M dont la composition est la suivante, les pourcentages étant donnés un poids. M :
- HEMA (100) 76,7 %
- peroxyde (101) 2 %
- amine (103) 1,20 %
- PBDM (105) 20,1 %

Cependant, l'adhérence du mélange précité est faible.

Les compromis sélectionnés grâces aux réglages simples de facteurs tels que la viscosité et de la vitesse ou du temps global de polymérisation permettent de sélectionner rapidement le procédé adéquat pour la fabrication des cartes ainsi que du moule utilisé.

Les cartes obtenues par le procédé selon l'invention avec utilisation du système acrylique ou méthacrylique sont, qu'elles soient à contacts ou sans, flexibles, dures, résistantes au chocs, et présentent un bon état de surface. Le choix des monomères ou des polymères modifiants, tels que, par exemple, l'acrylate ou le méthacrylate de butyle, permettent le réglage des qualités précitées des cartes.

Bien entendu, différents systèmes réactifs monomères/polymères, thermodurcissables, permettant une synthèse rapide de composés polymérisés via une réaction d'allongement de chaîne activée, peuvent être appliqués selon le procédé de l'invention et, notamment, des systèmes acryliques ou méthacryliques autres que le système MMA/PMMA, des systèmes à époxydes β qui polymérisent, par exemple, par voie cationique, et des systèmes à polyuréthannes qui polymérisent, par exemple, par chauffage à des températures au delà d'une température limite de réaction.

Les monomères 100 sont choisis pour leur caractéristiques et leur impact sur la couche polymérisée 6. Le MMA est choisi pour l'adhésion et la rigidité, le THFMA est choisi pour l'adhésion, l'IBOMA est choisi pour la tenue en température et le TMPTMA, pour la rigidité. Avec un mélange de monomères 100, on trouve ainsi un compromis pour l'adhésion, la rigidité et la tenue en température de la couche 6.

## Revendications

1. Procédé de fabrication d'une carte électronique (1) comportant un micromodule (2) inséré dans un corps de carte (3), une couche (6) dudit corps de carte (3) étant une couche plastique polymérisée (6), caractérisé en ce que :
- on répand, sur un support (21) de fabrication de la carte, un mélange
caractérisé en ce que ledit mélange est obtenu à partir d'au moins deux solutions conservées séparément, une première solution comportant un amorceur (101) de polymérisation, une seconde solution comportant un accélérateur (103) ; et d'un monomère liquide (100), de viscosité comprise entre 100 et 1000 mPa.s et de préférence inférieure à 500mPa.s à la température de répandage, conservé dans la première ou la deuxième solution ou dans une autre solution.

2. Procédé selon la revendication 1, caractérisé en ce que le support (21) de fabrication est formé d'une cavité ouverte (22) d'un demi-moule (23) disposé sur un feuil (24) destiné à former une couche de dessous du corps de carte (3) et en ce que le mélange est répandu sur le support (21) sous une pression réduite.

3. Procédé selon la revendication 1, caractérisé en ce que le support (21) de fabrication est formé d'un cadre alvéolé.

4. Procédé selon la revendication 1, caractérisé en ce que le support (21) de fabrication est formé d'un moule muni d'une cavité fermée dans laquelle le mélange est injecté sous pression.

5. Procédé selon l'une des revendications 1, 2, 3 ou 4, caractérisé en ce que :
- on ajoute, au mélange répandu, un composé intercalaire simple (104) compatible avec le monomère (100) et portant un radical R.

6. Procédé selon l'une des revendications précédentes, caractérisé en ce que :
- on ajoute, au mélange répandu, un composé intercalaire élastomérique (105).

7. Procédé selon l'une des revendications précédentes, caractérisé en ce qu'on ajoute, au mélange répandu, un polymère (106) compatible avec le monomère (100).

8. Procédé selon la revendication 7, caractérisé en ce que :
- on ajuste un rapport polymère/(monomère + polymère) en poids, de manière à régler la viscosité du mélange répandu.

9. Procédé selon l'une des revendications 7 ou 8, caractérisé en ce que :
- on ajuste le rapport polymère/(monomère + polymère) en poids, de manière à ce qu'il soit compris entre 2/100 et 20/100 ou supérieur, la polymérisation du monomère (100) présentant un effet de gel.

10. Procédé selon l'une des revendications précédentes, caractérisé en ce que
- on effectue une lamination du mélange.

11. Procédé selon l'une des revendications précédentes, caractérisé en ce qu'on fabrique une carte électronique sans contact comportant une antenne (12), en contact avec la couche plastique (6).

12. Procédé selon l'une des revendications précédentes, caractérisé en ce qu'on utilise, comme monomère (101), un monomère acrylique ou méthacrylique.

13. Procédé selon la revendication 12, caractérisé en ce que le monomère acrylique ou méthacrylique est choisi parmi les monomères suivants : méthacrylate de méthyle, méthacrylate d'ethyl triglycol, méthacrylate de 2 hydroxyéthyl, ester d'acide méthacrylique, isobornyl méthacrylate, isobornyl acrylate, dicyclopentenyloxyethyl méthacrylate, méthacrylate de tetrahydrofurfuryle, méthacrylate de n-butyl, méthacrylate de benzyl, 2, diméthylaminoéthyl-méthacrylate, 1, 4-diméthacrylate de butanediol, diméthacrylate de diéthylèneglycol, diméthacrylate de diuréthane, 1, 12 diméthacrylate de dodécandiol et triméthyiolpropantriméthacrylate.

14. Procédé selon la revendication 13, caractérisé en ce que l'amorceur est un peroxyde et en ce que l'accélérateur est un amine.

## Patentansprüche

1. Herstellungsverfahren einer Elektronikkarte (1) mit einem in einem Kartenkörper (3) eingefügten Mikromodul (2), wobei eine Schicht (6) des besagten Kartenkörpers (3) eine polymerisierte Plastikschicht (6) ist, dadurch gekennzeichnet, dass :
- man auf einem Herstellungsträger (21) der Karte eine Mischung verbreitet, dadurch gekennzeichnet, dass die besagte Mischung aus mindestens zwei getrennt aufbewahrten Lösungen besteht, einer ersten Lösung mit einem Polymerisierungsauslöser (101) und einer zweiten Lösung mit einem Beschleuniger (103) ; und mit einem flüssigen Monomer (100) mit einer Viskosität zwischen 100 und 1000 mPa.s und vorzugsweise weniger als 500 mPa.s bei Auftragstemperatur, das in der ersten oder der zweiten Lösung oder in einer anderen Lösung aufbewahrt wird.

2. Verfahren nach Anspruch 1, dadurch gekennzeichnet, dass der Herstellungsträger (21) aus einem offenen Hohlraum (22) einer auf einer Folie (24) angeordneten Halbform (23) besteht, um eine Schicht unter dem Kartenkörper (3) zu bilden, und dass die Mischung unter geringem Druck auf dem Träger (21) verbreitet wird.

3. Verfahren nach Anspruch 1, dadurch gekennzeichnet, dass der Herstellungsträger (21) aus einem wabenförmigen Rahmen gebildet wird.

4. Verfahren nach Anspruch 1, dadurch gekennzeichnet, dass der Herstellungsträger (21) aus einer Form mit einem geschlossenen Hohlraum gebildet wird, in den die Mischung unter Druck eingespritzt wird.

5. Verfahren nach einem der Ansprüche 1, 2, 3 oder 4, dadurch gekennzeichnet, dass :
- man der verbreiteten Mischung eine einfache Zwischenverbindung (104) hinzufügt, die mit dem Monomer (100) kompatibel ist und ein Radikal R trägt.

6. Verfahren nach einem der vorstehend genannten Ansprüche, dadurch gekennzeichnet, dass :
- man der verbreiteten Mischung eine Elastomer-Zwischenverbindung (105) hinzufügt.

7. Verfahren nach einem der vorstehend genannten Ansprüche, dadurch gekennzeichnet, dass man der verbreiteten Mischung ein mit dem Monomer (100) kompatibles Polymer (106) hinzufügt.

8. Verfahren nach Anspruch 7, dadurch gekennzeichnet, dass :
- man ein Polymerverhältnis/ (Monomer + Polymer) gewichtsmässig einstellt, um die Viskosität der verbreiteten Mischung zu regulieren.

9. Verfahren nach einem der Ansprüche 7 oder 8, dadurch gekennzeichnet, dass :
- man das Polymerverhältnis/ (Monomer + Polymer) gewichtsmässig so einstellt, dass es 2/100 bis 20/100 oder mehr beträgt, wobei die Polymerisierung des Monomers (100) eine Gel-Wirkung aufweist.

10. Verfahren nach einem der vorstehend genannten Ansprüche, dadurch gekennzeichnet, dass :
- man die Mischung überwalzt.

11. Verfahren nach einem der vorstehend genannten Ansprüche, dadurch gekennzeichnet, dass man eine kontaktlose Elektronikkarte herstellt, die eine mit der plastikschicht (6) in Kontakt stehende Antenne (12) umfasst.

12. Verfahren nach einem der vorstehend genannten Ansprüche, dadurch gekennzeichnet, dass man als Monomer (101) ein Acryl- bzw. Methacryl-Monomer verwendet.

13. Verfahren nach Anspruch 12, dadurch gekennzeichnet, dass ein Acryl- oder Methacrylmonomer unter folgenden Monomeren ausgewählt wird : Methylmethacrylat, Triglykolethylmethacrylat, 2-Hydroxyethylmethacrylat, Methacrylsäureester, Isobornylmethacrylat, Isobornylacrylat, Dicyclopentenyloxyethylmethacrylat, Tetrahydrofurfurylmethacrylat, n-Butylmethacrylat, Benzylmethacrylat, 2-Dimethylaminethylmethacrylat, 1,4-Butandioldimethylmethacrylat, Diethylenglykoldimethylacrylat, Diurethane-dimethacrylat, 1-12 Dodecandiol-dimethylacrylat und Trimethylolpropantrimethacrylat.

14. Verfahren nach Anspruch 13, dadurch gekennzeichnet, dass der Auslöser ein Peroxid und der Beschleuniger ein Amin ist.

## Claims

1. A method of manufacturing an electronic card (1) having a micromodule (2) inserted in a card body (3), a layer (6) on the said card body (3) being a polymerised plastic layer (6), characterised in that:
- there are spread, on a support (21) for manufacturing the card, a mixture characterised in that the said mixture is obtained from at least two solutions stored separately, a first solution containing a polymerisation trigger (101), a second solution containing an accelerator (103); and a liquid monomer (100), with a viscosity between 100 and 1000 mPa.s and preferably below 500 mPa.s at the spreading temperature, kept in the first or second solution or in another solution.

2. A method according to Claim 1, characterised in that the manufacturing support (21) is formed by an open cavity (22) in a half-mould (23) disposed on a film (24) intended to form an underlayer on the card body (3) and in that the mixture is spread on the support (21) at reduced pressure.

3. A method according to Claim 1, characterised in that the manufacturing support (21) is formed by a honeycomb frame.

4. A method according to Claim 1, characterised in that the manufacturing support (21) formed by a mould provided with a closed cavity in which the mixture is injected under pressure.

5. A method according to one of Claims 1, 2, 3 or 4, characterised in that:
- a simple intermediate compound (104) compatible with the monomer (100) and carrying a radical R is added to the spread mixture.

6. A method according to one of the preceding claims, characterised in that:
- an elastomeric intermediate compound (105) is added to the spread mixture.

7. A method according to one of the preceding claims, characterised in that a polymer (106) compatible with the monomer (100) is added to the spread mixture.

8. A method according to Claim 7, characterised in that:
- a polymer / (monomer + polymer) ratio by weight is adjusted so as to regulate the viscosity of the spread mixture.

9. A method according to one of Claims 7 or 8, characterised in that:
- the polymer / (monomer + polymer) ratio by weight is adjusted so that it is between 2/100 and 20/100 or greater, the polymerisation of the monomer (100) exhibiting a gel effect.

10. A method according to one of the preceding claims, characterised in that
- a lamination of the mixture is effected.

11. A method according to one of the preceding claims, characterised in that a contactless electronic card is manufactured, having an antenna (12), in contact with the plastic layer (6).

12. A method according to one of the preceding claims, characterised in that an acrylic or methacrylic monomer is used as the monomer (101).

13. A method according to Claim 12, characterised in that the acrylic or methacrylic monomer is chosen from amongst the following monomers: methyl methacrylate, ethyl triglycol methacrylate, 2-hydroxyethyl methacrylate, methacrylic acid ester, isobornyl methacrylate, isobornyl acrylate, dicyclopentenyloxyethyl methacrylate, tetrahydrofurfuryl methacrylate, n-butyl methacrylate, benzyl methacrylate, 2-(dimethylamino)ethyl methacrylate, 1,4-butanediol dimethacrylate, diethyleneglycol dimethacrylate, diurethane dimethacrylate, 1,12-dodecanediol dimethacrylate and trimethylolpropane trimethacrylate.

14. A method according to Claim 13, characterised in that the trigger is a peroxide and in that the accelerator is an amine.
